# EUROPÄISCHE PATENTSCHRIFT

(11) **EP 2 514 088 B1**
(45) Veröffentlichungstag und Bekanntmachung des Hinweises auf die Patenterteilung: **14.05.2014**
(21) Anmeldenummer: 10778949.7
(22) Anmeldetag: 03.11.2010
(51) Int. Cl.: H02P 1/46, H02P 1/52

(54) **VERFAHREN ZUM STARTEN EINER SYNCHRONMASCHINE**
METHOD FOR STARTING A SYNCHRONOUS MACHINE
PROCÉDÉ DE DÉMARRAGE D'UNE MACHINE SYNCHRONE

(30) Priorität: 17.12.2009 DE 102009054851
(43) Veröffentlichungstag der Anmeldung: 24.10.2012
(73) Patentinhaber: Robert Bosch GmbH, 70442 Stuttgart (DE)
(72) Erfinder: MERKEL, Tino, 71701 Schwieberdingen (DE); GROETER, Hans-Peter, 71665 Vaihingen (DE); GOETTING, Gunther, 70469 Stuttgart (DE); SCHNEIDER, Georg, 71636 Ludwigsburg (DE)
(86) Internationale Anmeldenummer: PCT/EP2010/066680
(87) Internationale Veröffentlichungsnummer: WO 2011/082859

(56) Entgegenhaltungen:
- JP-A- 11 187 700
- JP-A- 60 174 080
- US-A1- 2009 259 391

## Beschreibung

### Stand der Technik

Die Erfindung geht aus von einem Verfahren nach dem Oberbegriff des unabhängigen Anspruchs.

Verschiedenartige Verfahren zur Regelung von Elektromaschinen, wie beispielsweise permanenterregte Synchronmaschinen, sind bekannt, beispielsweise aus der US 2007/0170880 A1. Die Regelung von Elektromaschinen erfordert eine möglichst genaue Kenntnis der Rotorlage der Elektromaschine, die beispielsweise durch den Einsatz von Digitalsensorik ermittelt werden kann.

Bei Verwendung von Digitalsensorik ist nachteilig, dass im Stillstand nur eine ungefähre Lage des Rotors abgeschätzt werden kann. Bei sehr kleinen Drehzahlen kann die Rotorlage aufgrund des zeitlichen Abstandes zwischen zwei Digitalsensorsignalen für eine gute Stromregelung und Drehmomentenregelung nicht ausreichend abgeschätzt werden, insbesondere bei dynamischen Beschleunigungsvorgängen. Dies führt dazu, dass ein komfort-akzeptabler Einsatz von Digitalsensorik zur Bestimmung der Rotorlage nur bei Antriebssträngen mit einer schleifenden Kupplung oder einem hydraulischen Wandler zwischen Elektromaschine und Rädern des Fahrzeugs möglich ist. Insbesondere bei Triebsträngen mit niedrigem Übersetzungsverhältnis von Elektromaschine zu Rad sind die heute existierenden Regelungsprobleme in Form von Momentenstößen und Geräuschbildung stark wahrnehmbar.

Um den elektrischen Traktionsantrieb zügig und mit weniger Vibrationen zu beschleunigen, schlägt das Dokument US 2009 259 391 vor, das Sollmoment aus Anfang für eine bestimmte zeit lang zu erhöhen.

### Vorteile der Erfindung

Das erfindungsgemäße Verfahren mit den Kennzeichen des Anspruchs 1 hat den Vorteil, dass es eine Strategie zum komfortablen, ruckfreien und sicheren Anlauf einer Synchronmaschine aus dem Stillstand darstellt und somit eine Erweiterung des Einsatzgebietes der Digitalsensorik bei Hybrid- und Elektrofahrzeugen auf Anwendungsfälle mit direktem Durchgriff auf die Räder darstellt. Dies wird erfindungsgemäß erreicht, indem ein Vorgabedrehmoment M_V1 vorgegeben wird und eine Drehzahl der Synchronmaschine nach dem Start angepasst wird, indem in einem ersten Schritt ein höheres Drehmoment M_H1 als das Vorgabedrehmoment M_V1 vorgegeben wird und in einem zweiten Schritt das Drehmoment M_H1 auf einen positiven Wert M_H1a unterhalb des Vorgabedrehmoment M_V1 reduziert wird und in einem dritten Schritt das Drehmoment M_H1a auf das Vorgabedrehmoment M_V1 erhöht wird. Aufgrund des im ersten Verfahrensschrittes vorgegebenen höheren Drehmomentes M_H1 erfolgt die Drehzahlerhöhung zunächst schneller, um Spiel bzw. Lose im Triebstrang zu überwinden und die Elastizität der Antriebsstrangkomponenten in Getriebe und Achswellen möglichst schnell zu kompensieren und Drehmoment an die Räder zu übertragen.

Insbesondere wird das höhere Drehmoment M_H1 im zweiten Verfahrensschritt auf einen positiven Wert M_H1a unterhalb des Vorgabedrehmoment M_V1 reduziert, dass während der Verspannung im Antriebsstrang keine mechanischen Schwingungen angeregt werden. Während der im zweiten Verfahrensschrittes beschriebenen Reduktion des höheren Drehmomentes M_H1 auf einen positiven Wert M_H1a unterhalb des Vorgabedrehmoment M_V1 wird die Verspannung des Antriebsstrang kurzfristig aufgehoben, wodurch kein Drehmoment an die Räder übertragen wird und die Drehzahl konstant bleibt. Die im dritten Verfahrensschritt beschriebene Erhöhung des Drehmomentes M_H1a auf das Vorgabedrehmoment M_V1 hat eine Zunahme der Verspannung des Antriebsstranges zur Folge, wodurch wieder Drehmoment an die Räder übertragen wird und die Drehzahl kontinuierlich steigt.

Durch die in den abhängigen Ansprüchen genannten Maßnahmen sind vorteilhafte Weiterbildungen des in dem unabhängigen Anspruch angegebenen Verfahrens möglich.

Das im unabhängigen Anspruch beschriebene Verfahren zum Starten der Synchronmaschine lässt sich vorteilhaft sowohl auf eine Synchronmaschine, die sich im Stillstand befindet, als auch auf eine Synchronmaschine, die eine Drehzahl unterhalb eines Schwellenwertes aufweist, wobei der Schwellenwert von der Polpaarzahl der jeweiligen Synchronmaschine abhängt, anwenden.

Ist eine Synchronmaschine bereits gestartet und anschließend abgebremst worden, kann der Bremsvorgang bis zum Stillstand der Synchronmaschine ausgeführt werden. Es ist aber auch möglich, dass die Synchronmaschine kurz vor Erreichen des Stillstands erneut gestartet werden muss, so dass der Stillstand nicht erreicht wird.

Die Lage des Rotors ist im Stillstand nur mit relativ geringer Genauigkeit bekannt. Vorteilhaft wird dem Rotor vor Starten der Synchronmaschine eine definierte Ausgangslage gegeben, um einen Betrieb im instabilen Bereich zu vermeiden. Der Statorstrom wird daher vor Ausführung des ersten Verfahrensschrittes zeitlich ansteigend auf einen Maximalwert gebracht. Der Rotor kann sich in Folge des Stromanstiegs auf das durch den Statorstrom erzeugte Magnetfeld des Stators ausrichten.

Nachdem der im unabhängigen Anspsruch 1 letztgenannte Verfahrensschritt ausgeführt wurde, steigt der Drehzahlverlauf vorteilhaft proportional zum Vorgabedrehmoment M_V1 an, da der Antriebsstrang durch den genannten Verfahrensschritt ausreichend verspannt ist und somit keine Momentenstöße auftreten oder mechanische Schwingungen angeregt werden können.

Vor dem Start einer Synchronmaschine kann ein beliebiges Vorgabedrehmoment vorgegeben werden. Zu jedem dieser vorgegebenen Vorgabedrehmomente wird die Synchronmaschine im ersten Verfahrensschritt mit einem in Bezug auf das das jeweilige Vorgabedrehmoment höheren Drehmoment gestartet. Unter der Annahme, dass M_V1 das Vorgabedrehmoment eines ersten Startvorganges ist, wird die Synchronmaschine im ersten Verfahrenschritt mit dem in Bezug auf M_V1 höheren Drehmoment M_H1 gestartet. Unter der Annahme, dass M_V2 das Vorgabedrehmoment eines zweiten Startvorganges ist, wird die Synchronmaschine im ersten Verfahrensschritt mit dem in Bezug auf M_V2 höheren Drehmoment M_H2 gestartet. Ist M_V1 größer gleich M_V2, ist M_H1 vorteilhaft größer gleich M_H2. Wird also ein größeres Vorgabedrehmoment M-V1 als das Vorgabedrehmoment M_V2 vorgegeben, erfolgt der Startvorgang vorteilhaft mit einem größeren Drehmoment M_H1 und einer resultierenden größeren Verspannung des Antriebsstranges als im Falle eines kleineren Vorgabedrehmomentes M_V2 mit dem für den Startvorgang resultierenden Drehmoment M_H2. Da M_H2 kleiner gleich M_H1 ist, führt M_H2 zu einer kleineren Verspannung des Antriebsstranges als dies bei M_H1 der Fall ist.

Durch die im unabhängigen Anspruch 1 genannten Verfahrensschritte ist es möglich, das Einsatzgebiet der Digitalsensorik bei Hybrid- und E-Fahrzeugantrieben auf Antriebe mit direktem Durchgriff auf die Räder zu erweitern, wie es beispielsweise bei E-Achsen, DCT-Getrieben oder automatisierte Schaltgetrieben der Fall ist. Vorteilhaft wird somit für die Lagebestimmung des Rotors der Synchronmaschine Digitalsensorik eingesetzt. Digitalsensorik ist ein bewährtes und robustes Sensorsystem mit hohen Freiheitsgraden bezüglich des Einbaus.

### Zeichnung

Die Erfindung wird nachfolgend in Ausführungsbeispielen anhand der zugehörigen Zeichnungen näher erläutert. In Fig. 1 ist eine schematische Ansicht eines Synchronmaschinensystems dargestellt. In Fig. 2 ist in einem Blockschaltbild eine erste Startvariante der Synchronmaschine gezeigt. Fig. 3 stellt ein weiteres Blockschaltbild einer zweiten Startvariante der Synchronmaschine dar. Fig. 4 zeigt eine schematische Darstellung eines möglichen Drehmomentenverlaufs gemäß Hauptanspruch 1 und des dazugehörigen Drehzahlverlaufs. Fig. 5 stellt schematisch einen möglichen Drehmomentenverlauf gemäß Hauptanspruch 2 und des dazugehörigen Drehzahlverlaufs dar. Fig. 6 zeigt schließlich schematisch zwei sich unterscheidende Drehmomentverläufe und deren dazugehörigen Drehzahlverläufe.

### Beschreibung der Ausführungsbeispiele

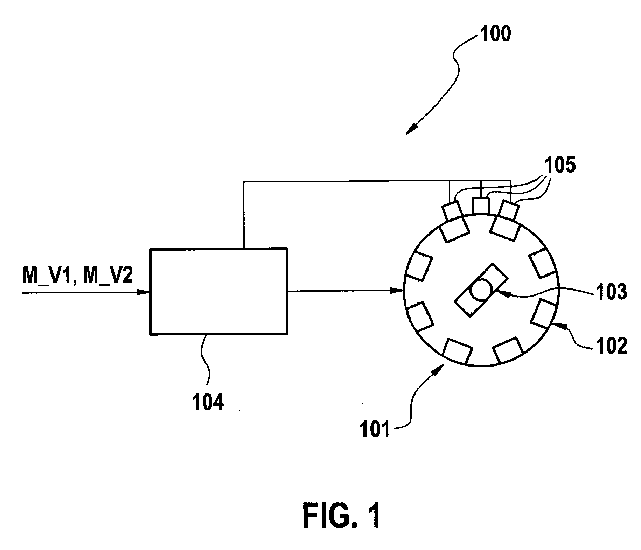

Die Fig. 1 zeigt schematisch ein Synchronmaschinensystem 100. Das Synchronmaschinensystem 100 besteht aus einer Synchronmaschine 101 und dem dazugehörigen Steuergerät 104. Die in Fig. 1 gezeigte Synchronmaschine 101 weist eine stationäre Komponente (Stator) 102 und eine rotierende Komponente (Rotor) 103 auf. In das Steuergerät 104 wird extern ein Vorgabedrehmoment M_V1 eingespeist. Zur Erfassung der Rotorlage wird Digitalsensorik 105 eingesetzt.

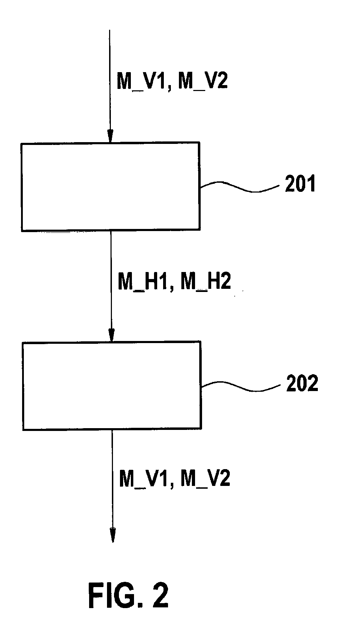

Die Fig. 2 zeigt in einem Blockschaltbild ein erstes Ausführungsbeispiel der Erfindung. Aus dem Fahrzeugstillstand heraus ist ein kontrollierter Start der Synchronmaschine und der Übergang in den etablierten Regelbetrieb mit dem nachfolgend geschilderten Verfahren möglich. Die Lage des Rotors ist im Stillstand nur mit einer relativ geringen Genauigkeit bekannt. Um dem Rotor eine definierte Ausgangslage zu geben und einen Betrieb im stabilen Bereich zu gewährleisten, wird der Statorstrom zunächst auf einen gewählten Maximalwert gebracht, wodurch der Rotor sich auf das durch den Statorstrom erzeugte Magnetfeld ausrichtet. Aus der bisherigen Signalauswertung ist noch keine zuverlässige Rotorlageinformation bekannt. Die Digitalsensorik liefert im Allgemeinen erst ab einer Drehzahl von ca. 100 U/min genügend Signale für eine ausreichend genau Berechnung der Rotorlage, um in den konventionellen feldorientierten Drehmoment-Regelungsbetrieb überzugehen. Liegt ein Vorgabedrehmoment M_V1 vor, so wird erfindungsgemäß in einem ersten Schritt 201 die Synchronmaschine 101 mit einem höheren Drehmoment M_H1 als das Vorgabedrehmoment M_V1 gestartet. Durch das höhere Drehmoment M_H1 erfolgt die Drehzahlerhöhung zunächst schneller, um Spiel bzw. Lose im Triebstrang zu überwinden und die Elastizität der Antriebsstrangkomponenten in Getriebe und Achsewellen möglichst schnell zu kompensieren und Drehmoment an die Räder zu übertragen. Durch das höhere Drehmoment M_H1 wird der resultierende Drehzahlverlauf so vorgegeben, dass während der Verspannung des Antriebsstrangs keine mechanischen Schwingungen angeregt werden. Anschließend wird in einem zweiten Schritt 202 das höhere Drehmoment M_H1 auf das Vorgabedrehmoment M_V1 reduziert.

Wird ein Vorgabedrehmoment M_V2 vorgegeben, das kleiner gleich M_V1 ist, wird die Synchronmaschine 101 in einem ersten Schritt 201 mit einem höheren Drehmoment M_H2 gestartet, das kleiner gleich M_H1 ist. Ist M_V1 gleich groß wie M_V2 ist M_H1 gleich groß wie M_H2. Ist M_V2 kleiner als M_V1 ist M_H2 kleiner als M_H1. Anschließend wird M_H2 in einem zweiten Schritt 202 auf das Vorgabedrehmoment M_V2 reduziert.

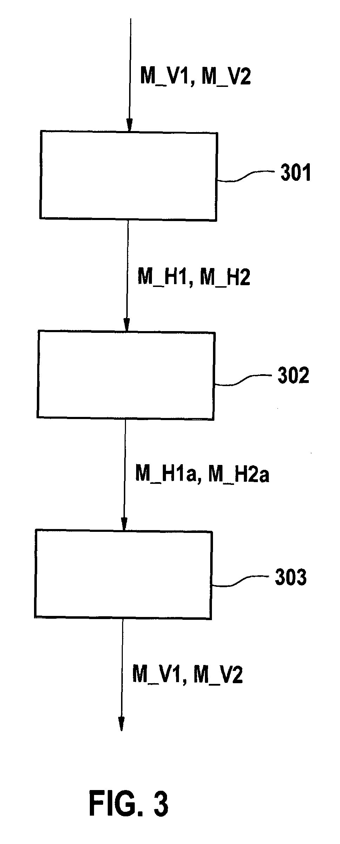

Die Fig. 3 zeigt in einem Blockschaltbild ein zweites Ausführungsbeispiel der Erfindung. Aus dem Fahrzeugstillstand heraus ist ein kontrollierter Start der Synchronmaschine und der Übergang in den etablierten Regelbetrieb mit dem nachfolgend geschilderten Verfahren möglich. Die Lage des Rotors ist im Stillstand nur mit einer relativ geringen Genauigkeit bekannt. Um dem Rotor eine definierte Ausgangslage zu geben und einen Betrieb im stabilen Bereich zu gewährleisten, wird der Statorstrom zunächst auf einen gewählten Maximalwert gebracht, wodurch der Rotor sich auf das durch den Statorstrom erzeugte Magnetfeld ausrichtet. Aus der bisherigen Signalauswertung ist noch keine zuverlässige Rotorlageinformation bekannt. Die Digitalsensorik als Einrichtung zur Lageerfassung, die mehrere oder z.B. drei Hall-Sensoren verwendet, liefert im Allgemeinen erst ab einer Drehzahl von ca. 100 U/min genügend Signale für eine ausreichend genau Berechnung der Rotorlage, um in den konventionellen feldorientierten Drehmoment-Regelungsbetrieb überzugehen. Liegt ein Vorgabedrehmoment M_V1 vor, so wird erfindungsgemäß in einem ersten Schritt 301 die Synchronmaschine 101 mit einem höheren Drehmoment M_H1 als das Vorgabedrehmoment M_V1 gestartet. Durch das höhere Drehmoment M_H1 erfolgt die Drehzahlerhöhung zunächst schneller, um Spiel bzw. Lose im Triebstrang zu überwinden und die Elastizität der Antriebsstrangkomponenten in Getriebe und Achsewellen möglichst schnell zu kompensieren und Drehmoment an die Räder zu übertragen. Durch das höhere Drehmoment M_H1 wird der resultierende Drehzahlverlauf so vorgegeben, dass während der Verspannung des Antriebsstrangs keine mechanischen Schwingungen angeregt werden. In einem zweiten Schritt 302 wird das höhere Drehmoment M_H1 auf einen positiven Wert M_H1a unterhalb des Vorgabedrehmoments M_V1 reduziert. In einem dritten Schritt 303 wird das Drehmoment M_H1a anschließend auf das Vorgabedrehmoment M_V1 erhöht.

Wird ein Vorgabedrehmoment M_V2 vorgegeben, das kleiner gleich M_V1 ist, wird die Synchronmaschine 101 in einem ersten Schritt 301 mit einem höheren Drehmoment M_H2 als das Vorgabedrehmoment M_V2 gestartet, wobei M_H2 kleiner gleich M_H1 ist. Ist M_V1 gleich groß wie M_V2 ist M_H1 gleich groß wie M_H2. Ist M_V2 kleiner als M_V1 ist M_H2 kleiner als M_H1. Anschließend wird M_H2 in einem zweiten Schritt 302 auf einen positiven Wert M_H2a unterhalb des Vorgabedrehmoments M_V2 reduziert. In einem dritten Schritt 303 wird das Drehmoment M_H1a schließlich auf das Vorgabedrehmoment M_V2 erhöht.

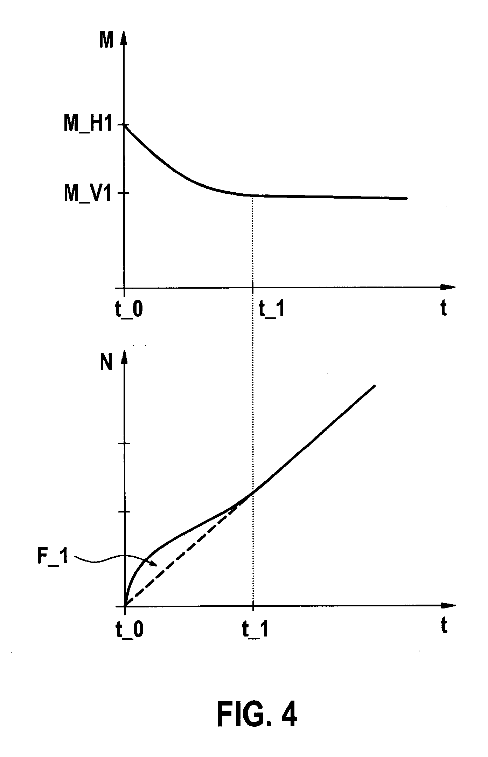

Fig. 4 zeigt im oberen Graphen eine schematische Darstellung eines möglichen Drehmomentenverlaufs gemäß Hauptanspruch 1, wobei das Drehmoment M über der Zeit t aufgetragen ist. Im unteren Graphen der Fig. 4 wird der dazugehörigen Drehzahlverlauf dargestellt, bei dem die Drehzahl N über der Zeit t aufgetragen ist. Da die Lage des Rotors im Stillstand der Synchronmaschine nur mit einer relativen Genauigkeit bekannt ist, wird der Statorstrom vor dem Zeitpunkt t_0 zunächst auf einen gewählten Maximalwert gebracht, wodurch der Rotor sich auf das durch den Statorstrom erzeugte Magnetfeld ausrichtet. Liegt ein Vorgabedrehmoment M_V1 vor, so wird erfindungsgemäß in einem ersten Schritt 201 die Synchronmaschine 101 mit einem höheren Drehmoment M_H1 als das Vorgabedrehmoment M_V1 gestartet. Würde mit dem Vorgabedrehmoment M_V1 gestartet werden, wäre der lineare Drehzahlverlauf der durch die gestrichelten Linie, der im unteren Graphen gezeigten Kurve, zu erwarten. Durch das in Bezug auf das Vorgabedrehmoment M_V1 erfindungsgemäße höhere Drehmoment M_H1 erfolgt die Drehzahlerhöhung zunächst schneller und weist bis zum Zeitpunkt t_1 einen nichtlinearen Verlauf auf, was durch die durchgezogene Linie im unteren Diagramm der Fig. 4 verdeutlicht wird. Dadurch kann Spiel im Triebstrang schneller überwunden werden und Elastizitäten der Antriebsstrangkomponenten in Getriebe und Achswellen möglichst schnell kompensiert werden. Der Drehzahlverlauf ist abhängig von der Höhe des Vorgabedrehmomentes M_V1. Anschließend wird in einem zweiten Schritt 202 das höhere Drehmoment M_H1 erfindungsgemäß bis zum Zeitpunkt t_1 auf das Vorgabedrehmoment M_V1 reduziert. Durch die Reduktion des höheren Drehmoments M_H1 auf das Vorgabedrehmoment M_V1 bleibt die Steigung des resultierenden Drehzahlverlaufs stets positiv. Nach dem Zeitpunkt t_1 steigt die Drehzahl linear an, wobei die Steigung des Drehzahlverlaufs im linearen Bereich proportional zum Sollmoment ist. Die Fläche F_1, die im Zeitbereich zwischen t_0 und t_1 zwischen dem nichtlinearen Verlauf der durchgezogenen Kurve und dem linearen Verlauf der gestrichelten Kurve eingeschlossen wird, ist ebenfalls proportional zum Vorgabedrehmoment M_V1 und entspricht dem mechanischen Verdrehungswinkel des Antriebsstrangs zwischen Rotor und Rad.

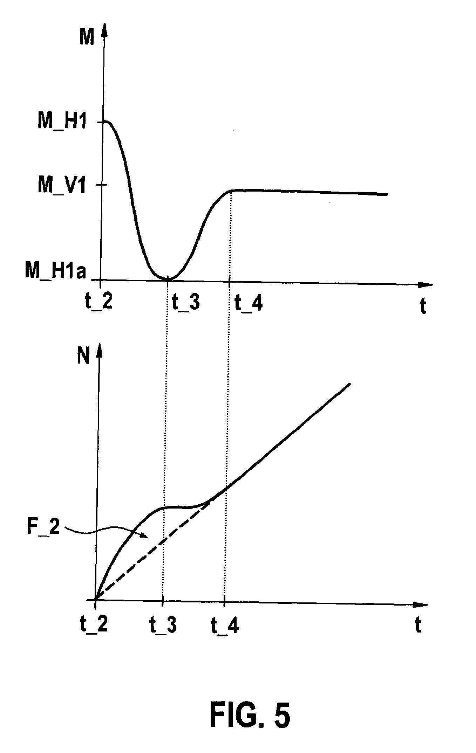

Fig. 5 zeigt im oberen Graphen eine schematische Darstellung eines möglichen Drehmomentenverlaufs gemäß Hauptanspruch 2, wobei das Drehmoment M über der Zeit t aufgetragen ist. Im unteren Graphen der Fig. 5 wird der dazugehörigen Drehzahlverlauf dargestellt, bei dem die Drehzahl N über der Zeit t aufgetragen ist. Da die Lage des Rotors im Stillstand der Synchronmaschine nur mit einer relativen Genauigkeit bekannt ist, wird der Statorstrom vor dem Zeitpunkt t_2 zunächst auf einen gewählten Maximalwert gebracht, wodurch der Rotor sich auf das durch den Statorstrom erzeugte Magnetfeld ausrichtet. Liegt ein Vorgabedrehmoment M_V1 vor, so wird erfindungsgemäß in einem ersten Schritt 301 die Synchronmaschine 101 mit einem höheren Drehmoment M_H1 als das Vorgabedrehmoment M_V1 gestartet. Würde mit dem Vorgabedrehmoment M_V1 gestartet werden, wäre der lineare Drehzahlverlauf der durch die gestrichelten Linie, der im unteren Graphen gezeigten Kurve, zu erwarten. Durch das in Bezug auf das Vorgabedrehmoment M_V1 erfindungsgemäße höhere Drehmoment M_H1 erfolgt die Drehzahlerhöhung zunächst schneller und weist bis zum Zeitpunkt t_3 einen nichtlinearen Verlauf auf, was durch die durchgezogene Linie im unteren Diagramm der Fig. 5 verdeutlicht wird. Dadurch kann Spiel im Triebstrang schneller überwunden werden und Elastizitäten der Antriebsstrangkomponenten in Getriebe und Achswellen möglichst schnell kompensiert werden. Der Drehzahlverlauf ist abhängig von der Höhe des Vorgabedrehmomentes M_V1. Anschließend wird in einem zweiten Schritt 302 das höhere Drehmoment M_H1 erfindungsgemäß bis zum Zeitpunkt t_3 auf einen positiven Wert M_H1a unterhalb des Vorgabedrehmoment M_V1 reduziert. Durch die Reduktion des höheren Drehmoments M_H1 auf das Drehmoment M_H1a bleibt die Steigung des resultierenden Drehzahlverlaufs stets positiv oder gleich 0, wodurch die Drehzahl stets steigt oder kurzfristig konstant bleibt. Nach dem Zeitpunkt t_2 wird das Drehmoment M_H1a erfindungsgemäß bis zum Zeitpunkt t_4 auf das Vorgabedrehmoment M_V1 erhöht.

Nach dem Zeitpunkt t_4 steigt die Drehzahl linear an, wobei die Steigung des Drehzahlverlaufs im linearen Bereich proportional zum Sollmoment ist. Die Fläche F_2, die im Zeitbereich zwischen t_2 und t_4 zwischen dem nichtlinearen Verlauf der durchgezogenen Kurve und dem linearen Verlauf der gestrichelten Kurve eingeschlossen wird, ist ebenfalls proportional zum Vorgabedrehmoment M_V1 und entspricht dem mechanischen Verdrehungswinkel des Antriebsstrangs zwischen Rotor und Rad.

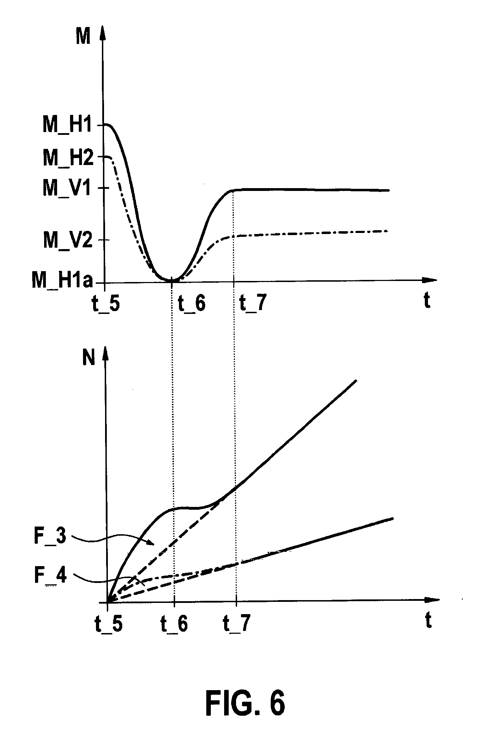

Fig. 6 zeigt im oberen Graphen eine schematische Darstellung zweier möglicher Drehmomentenverläufe gemäß Hauptanspruch 2, wobei das Drehmoment M über der Zeit t aufgetragen ist. Im unteren Graphen der Fig. 6 werden die dazugehörigen Drehzahlverlauf dargestellt, bei dem die Drehzahl N über der Zeit t aufgetragen ist. Liegt ein Vorgabedrehmoment M_V1 vor, so wird erfindungsgemäß in einem ersten Schritt 301 die Synchronmaschine 101 mit einem höheren Drehmoment M_H1 als das Vorgabedrehmoment M_V1 gestartet. Durch das in Bezug auf das Vorgabedrehmoment M_V1 erfindungsgemäße höhere Drehmoment M_H1 erfolgt die Drehzahlerhöhung zunächst schneller und weist einen Verlauf auf, der durch die durchgezogene Linie im unteren Diagramm der Fig. 6 verdeutlicht wird. Liegt ein Vorgabedrehmoment M_V2 vor, das kleiner als M_V1 ist, so wird erfindungsgemäß in einem ersten Schritt 301 die Synchronmaschine 101 mit einem höheren Drehmoment M_H2 als das Vorgabedrehmoment M_V2 gestartet, wobei M_H2 kleiner als M_H1 ist. Durch das in Bezug auf das Vorgabedrehmoment M_V2 erfindungsgemäße höhere Drehmoment M_H2 erfolgt die Drehzahlerhöhung zunächst schneller und weist einen Verlauf auf, der durch die strichpunktierte Linie im unteren Diagramm der Fig. 6 verdeutlicht wird.

Die Fläche F_3, die im Zeitbereich zwischen t_5 und t_7 zwischen dem nichtlinearen Drehzahlverlauf der durchgezogenen Kurve und dem linearen Verlauf der darunter liegenden gestrichelten Kurve eingeschlossen wird, ist proportional zum Vorgabedrehmoment M_V1 und entspricht dem mechanischen Verdrehungswinkel des Antriebsstrangs zwischen Rotor und Rad. Die Fläche F_4, die im Zeitbereich zwischen t_5 und t_7 zwischen dem nichtlinearen Drehzahlverlauf der strichpunktierten Kurve und dem linearen Verlauf der darunter liegenden gestrichelten Kurve eingeschlossen wird, ist proportional zum Vorgabedrehmoment M_V2 und entspricht dem mechanischen Verdrehungswinkel des Antriebsstrangs zwischen Rotor und Rad. Ist M_V1 größer gleich M_V2 und ist M_H1 größer gleich M_H2, dann ist die Fläche F_3 größer gleich der Fläche F_4.

## Patentansprüche

1. Verfahren zum Starten einer Synchronmaschine (101), die einen Stator (102) und einen Rotor (103) aufweist, wobei ein Vorgabedrehmoment (M_V1) vorgegeben wird und eine Drehzahl der Synchronmaschine (101) nach dem Start angepasst wird, **dadurch gekennzeichnet, dass**
- in einem ersten Schritt (301) ein höheres Drehmoment (M_H1) als das Vorgabedrehmoment (M_V1) vorgegeben wird,
- in einem zweiten Schritt (302) das Drehmoment (M_H1) auf einen positiven Wert (M_H1a) unterhalb des Vorgabedrehmoments (M_V1) reduziert wird,
- in einem dritten Schritt (303) das Drehmoment (M_H1a) auf das Vorgabedrehmoment (M_V1) erhöht wird.

2. Verfahren nach Anspruch 1, **dadurch gekennzeichnet, dass** sich die Synchronmaschine (101) vor Ausführung des ersten Verfahrensschrittes (201) oder (301) im Stillstand befindet oder eine Drehzahl unterhalb eines Schwellenwertes aufweist.

3. Verfahren nach einem der vorhergehenden Ansprüche, **dadurch gekennzeichnet, dass** der Ständerstrom der sich im Stillstand befindlichen Synchronmaschine (101) vor Ausführung des ersten Verfahrensschrittes (201) oder (301) auf einen gewählten Wert gebracht wird.

4. Verfahren nach einem der vorhergehenden Ansprüche, **dadurch gekennzeichnet, dass** sich nach erfolgtem Verfahrensschritt (202) oder (303) der Anstieg des Drehzahlverlaufs proportional zum Vorgabedrehmoment (M_V1) verhält.

5. Verfahren nach einem der vorhergehenden Ansprüche, **dadurch gekennzeichnet, dass** das Vorgabedrehmoment (M_V1) mit dem gemäß Anspruch 1 oder 2 dazugehörigen höheren Drehmoment (M_H1) eines beliebigen Startvorganges sich von einem Vorgabedrehmoment (M_V2) und dem gemäß Anspruch 1 oder 2 dazugehörigen höheren Drehmoment (M_H2) eines weiteren beliebigen Startvorganges so unterscheidet, dass das Vorgabedrehmoment (M_V1) größer gleich (M_V2) ist, wobei für (M_H1) und (M_H2) gilt, dass (M_H1) größer gleich (M_H2) ist.

6. Verfahren nach einem der vorhergehenden Ansprüche **dadurch gekennzeichnet, dass** für die Lagebestimmung des Rotors (103) der Synchronmaschine (101) Digitalsensorik eingesetzt wird.

7. Steuergerät (104) zum Betrieb der Synchronmaschine (101) **dadurch gekennzeichnet, dass** mit ihm die Verfahrensschritte der vorgenannten Ansprüche ausgeführt werden können.

## Claims

1. Method for starting a synchronous machine (101) which has a stator (102) and a rotor (103), wherein a prespecified torque (M_V1) is prespecified and a rotation speed of the synchronous machine (101) is adjusted after starting, **characterized in that**
- in a first step (301), a higher torque (M_H1) than the prespecified torque (M_V1) is prespecified,
- in a second step (302), the torque (M_H1) is reduced to a positive value (M_H1a) below the prespecified torque (M_V1),
- in a third step (303), the torque (M_H1a) is increased to the prespecified torque (M_V1).

2. Method according to Claim 1, **characterized in that** the synchronous machine (101) is stationary or is at a rotation speed below a threshold value before the first method step (201) or (301) is executed.

3. Method according to either of the preceding claims, **characterized in that** the stator current of the synchronous machine (101) which is stationary is moved to a selected value before the first method step (201) or (301) is executed.

4. Method according to one of the preceding claims, **characterized in that** the increase in the rotation speed profile is proportional to the prespecified torque (M_V1) after method step (202) or (303) is performed.

5. Method according to one of the preceding claims, **characterized in that** the prespecified torque (M_V1) with the, according to Claim 1 or 2, associated higher torque (M_H1) of any desired starting process differs from a prespecified torque (M_V2) and the, according to Claim 1 or 2, associated higher torque (M_H2) of any further desired starting process such that the prespecified torque (M_V1) is greater than or equal to (M_V2), wherein, for (M_H1) and (M_H2), (M_H1) is greater than or equal to (M_H2).

6. Method according to one of the preceding claims, **characterized in that** a digital sensor system is used for determining the position of the rotor (103) of the synchronous machine (101).

7. Controller (104) for operating the synchronous machine (101), **characterized in that** the method steps of the abovementioned claims can be executed with the said controller.

## Revendications

1. Procédé de démarrage d'une machine synchrone (101) comportant un stator (102) et un rotor (103), un couple de rotation alloué (M_V1) étant prédéfini et une vitesse de rotation de la machine synchrone (101) étant ajustée après le démarrage, **caractérisé en ce que** :
lors d'une première étape (301), un couple de rotation (M_H1) supérieur au couple de rotation alloué (M_V1) est prédéfini ;
lors d'une deuxième étape (302), le couple de rotation (M_H1) est réduit à une valeur positive (M_H1a) inférieure au couple de rotation alloué (M_V1) ;
lors d'une troisième étape (303), le couple de rotation (M_H1a) est augmenté pour atteindre le couple de rotation alloué (M_V1).

2. Procédé selon la revendication 1, **caractérisé en ce que** la machine synchrone (101) se trouve avant l'exécution de la première étape de procédé (201) ou (301) au point mort ou présente une vitesse de rotation inférieure à une valeur seuil.

3. Procédé selon l'une quelconque des revendications précédentes, **caractérisé en ce que** le courant de stator de la machine synchrone (101) se trouvant au point mort est amené à une valeur choisie avant l'exécution de la première étape de procédé (201) ou (301).

4. Procédé selon l'une quelconque des revendications précédentes, **caractérisé en ce qu'**après l'étape de procédé (202) ou (303) réalisée avec succès, la hausse de la courbe de vitesse de rotation suit proportionnellement le couple de rotation alloué (M_V1).

5. Procédé selon l'une quelconque des revendications précédentes, **caractérisé en ce que** le couple de rotation alloué (M_V1) se différencie de telle sorte, avec le couple de rotation supérieur (M_H1) correspondant selon la revendication 1 ou 2 d'un processus de démarrage quelconque, par rapport à un couple de rotation alloué (M_V2) et au couple de rotation supérieur (M_H2) correspondant selon la revendication 1 ou 2 d'un autre processus de démarrage quelconque, que le couple de rotation alloué (M_V1) est supérieur ou égal à (M_V2), (M_H1) étant supérieur ou égal à (M_H2) pour (M_H1) et (M_H2).

6. Procédé selon l'une quelconque des revendications précédentes, **caractérisé en ce que** pour la détermination de la position du rotor (103) de la machine synchrone (101), on utilise un système de détection sensorielle numérique.

7. Appareil de commande (104) servant à l'exploitation de la machine synchrone (101), **caractérisé en ce qu'**il permet de réaliser les étapes de procédé des revendications précédentes.
